# DEMANDE DE BREVET EUROPEEN

(11) **EP 2 500 196 A1**
(43) Date de publication de la demande: **19.09.2012**
(21) Numéro de dépôt: 12158437.9
(22) Date de dépôt: 07.03.2012
(51) Int. Cl.: B60J 7/22, B60N 2/44

(54) **Dispositif anti-remous pour un véhicule cabriolet**

(30) Priorité: 18.03.2011 FR 1152233
(71) Demandeur: Peugeot Citroën Automobiles SA, 78140 Vélizy Villacoublay (FR)
(72) Inventeur: Rebel, Vincent, 75010 PARIS (FR)

(57) **Abrégé**

Un dispositif anti-remous (D) est destiné à équiper une face arrière (FR) d'un dossier (DS) de siège (SI) de véhicule automobile de type cabriolet. Ce dispositif (D) comprend un cadre (CD) en forme de U sur lequel est monté un filet anti-remous (FA) et comprenant deux parties latérales (PL1, PL2) munies d'extrémités (E) propres à être montées à rotation sur la face arrière (FR) du dossier (DS) de manière à pouvoir prendre une position redressée dans laquelle le filet (FA) s'étend au-dessus d'une partie supérieure (PS) du dossier (DS), et une position rabattue dans laquelle le filet (FA) est placé devant la face arrière (FR) et le cadre (CD) comprend une partie transversale (PT) joignant ses deux parties latérales (PL1, PL2) et placée dans une position inférieure de sorte que le filet (FA) et le cadre (CD) définissent avec la face arrière (FR) un espace de rangement d'objet(s).

## Description

L'invention concerne les dispositifs anti-remous qui sont destinés à équiper certains véhicules automobiles de type cabriolet (ou coupé cabriolet).

Afin de réduire notablement les turbulences ou remous désagréables qui sont générés autour de la tête des passagers de certains véhicules automobiles de type cabriolet lorsqu'ils sont décapotés, il a été proposé d'installer des dispositifs anti-remous dans l'habitacle de ces véhicules. Ces dispositifs anti-remous comportent généralement un filet monté sur un cadre qui est soit monté à coulissement sur la face arrière ou à l'intérieur d'un dossier de siège (comme décrit dans le document brevet DE 19832367) ou bien dans une zone du cabriolet qui est située derrière un dossier de siège, soit amovible et solidarisable à l'appui-tête.

Ces dispositifs anti-remous ne sont pas entièrement satisfaisants. En effet, ceux qui sont montés à coulissement ne remplissent qu'une unique fonction anti-remous et rendent plus complexes à fabriquer l'intérieur ou la face arrière des dossiers de siège, et ceux qui sont amovibles ne remplissent qu'une unique fonction anti-remous, augmentent l'encombrement dans l'habitacle ou dans le coffre lorsqu'ils ne sont pas utilisés, et peuvent ne pas être présents dans le véhicule lorsque l'on a oublié de les placer dedans.

L'invention a donc pour but d'offrir une solution alternative qui ne présente pas tout ou partie des inconvénients précités.

L'invention propose notamment à cet effet un dispositif anti-remous, destiné à équiper la face arrière d'un dossier de siège de véhicule automobile de type cabriolet, et comprenant un cadre en forme de U sur lequel est monté un filet anti-remous et comprenant deux parties latérales munies d'extrémités propres à être montées à rotation sur la face arrière du dossier de manière à pouvoir prendre une position redressée dans laquelle le filet s'étend au-dessus d'une partie supérieure du dossier, et une position rabattue dans laquelle le filet est placé devant la face arrière et le cadre comprend une partie transversale joignant ses deux parties latérales et placée dans une position inférieure de sorte que le filet et le cadre définissent avec la face arrière un espace de rangement d'objet(s).

On comprendra que ce dispositif assure avantageusement, d'une part, une première fonction anti-remous lorsqu'il est redressé au-dessus du dossier, et, d'autre part, une seconde fonction de rangement lorsqu'il est rabattu contre la face arrière du dossier.

Le dispositif anti-remous selon l'invention peut comporter d'autres caractéristiques qui peuvent être prises séparément ou en combinaison, et notamment :
- son filet anti-remous peut être légèrement élastique;
- son cadre peut être propre à être placé dans sa position rabattue contre une partie de la face arrière du dossier qui définit un renfoncement;
- il peut comprendre deux charnières auxquelles sont solidarisées les extrémités des parties latérales du cadre et propres à être solidarisées à la face arrière du dossier;
- dans une variante, les extrémités des parties latérales du cadre peuvent être conformées de manière à être logées à rotation dans des logements définis sur la face arrière du dossier;
- il peut comprendre des premiers moyens d'immobilisation propres à être solidarisés à une partie inférieure de la face arrière du dossier et agencés pour immobiliser le cadre dans sa position rabattue contre cette face arrière;
   ➢ les premiers moyens d'immobilisation peuvent comprendre au moins un clip, ou d'au moins un taquet monté à rotation sur la face arrière du dossier;
- il peut comprendre des seconds moyens d'immobilisation propres à être solidarisés à une partie supérieure de la face arrière du dossier et agencés pour immobiliser le cadre dans sa position redressée;
   ➢ les seconds moyens d'immobilisation peuvent comprendre au moins deux clips propres à immobiliser étroitement et respectivement les deux parties latérales du cadre, ou bien au moins deux taquets montés à rotation sur la face arrière du dossier et propres à immobiliser étroitement et respectivement les deux parties latérales du cadre;
- il peut comprendre en outre au moins un cadre auxiliaire monté à rotation sur une partie latérale du cadre et sur lequel est monté un filet anti-remous auxiliaire.

L'invention propose également un dossier destiné à faire partie d'un siège de véhicule automobile de type cabriolet et comprenant une face arrière équipée d'un dispositif anti-remous du type de celui présenté ci-avant.

L'invention propose également un siège destiné à équiper un véhicule automobile de type cabriolet et comprenant un dossier du type de celui présenté ci-avant.

L'invention propose également un véhicule automobile de type cabriolet et comprenant un plancher sur lequel est installé au moins un siège du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de face du côté arrière, des sièges gauche et droit installés sur le plancher d'un cabriolet et équipés chacun d'un premier exemple de réalisation de dispositif anti-remous selon l'invention, en position rabattue (à gauche) ou redressée (à droite),
- la figure 2 illustre schématiquement, dans une vue de face du côté arrière, le siège droit de la figure 1 équipé d'un second exemple de réalisation de dispositif anti-remous selon l'invention, en position redressée,
- la figure 3 illustre schématiquement, dans une vue en coupe dans un plan XY (juste au dessus des seconds moyens d'immobilisation), le dossier du siège droit de la figure 1 (avec son dispositif anti-remous en position redressée), et
- la figure 4 illustre schématiquement, dans une vue en coupe dans un plan XZ, le dossier du siège gauche de la figure 1 (avec son dispositif anti-remous en position rabattue).

Les dessins annexés pourront non seulement servir à compléter l'invention, mais aussi contribuer à sa définition, le cas échéant.

L'invention a pour but d'offrir un dispositif anti-remous (D) destiné à équiper la face arrière (FR) d'un dossier (DS) d'un siège (SI) de véhicule automobile de type cabriolet (ou coupé cabriolet).

On notera que l'invention concerne n'importe quel siège disposant d'un dossier et pouvant accueillir un ou plusieurs passagers.

On considère dans ce qui suit, à titre d'exemple non limitatif, que le siège (SI) est l'un des deux sièges du rang un (1) du cabriolet. Mais, l'invention n'est pas limitée à cette application. En effet, le siège (SI) pourrait faire partie d'un rang intermédiaire du cabriolet, placé derrière le rang un.

Sur les figures, la direction X est la direction longitudinale du véhicule (et donc du siège), laquelle est sensiblement parallèle aux côtés latéraux comportant les portières latérales, la direction Y est la direction transversale du véhicule (et donc du siège), laquelle est sensiblement perpendiculaire aux côtés latéraux, et la direction Z est la direction verticale du véhicule, laquelle est sensiblement perpendiculaire au plancher PL.

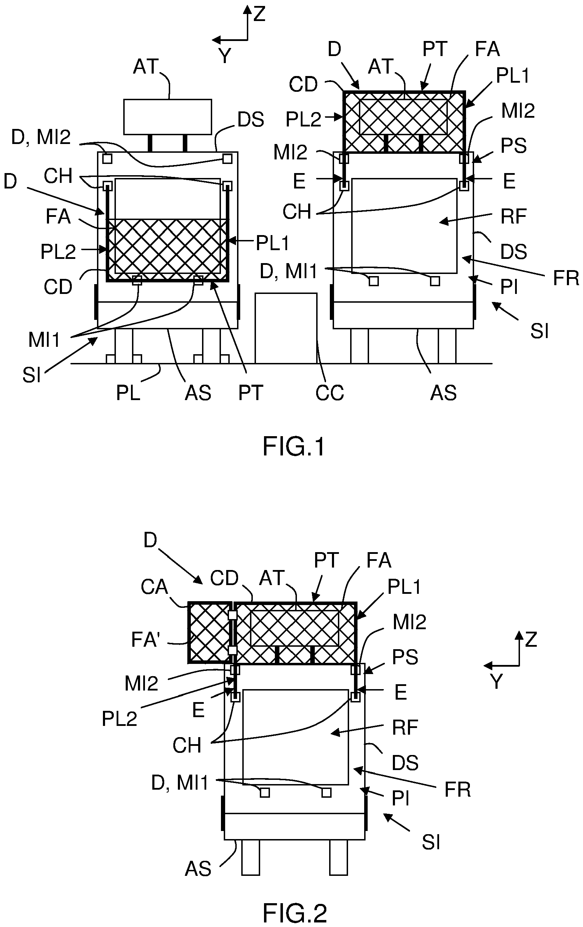

On a schématiquement représenté sur la figure 1 une partie d'un plancher PL de cabriolet sur laquelle sont installés deux sièges SI de type monoplace, de part et d'autre d'une console centrale CC (optionnelle). Comme indiqué ci-avant, ces deux sièges SI (droit et gauche) font partie du rang un du cabriolet. Par exemple, le siège situé à gauche est dédié au conducteur et le siège situé à droite est destiné au passager avant. Chaque siège SI comprend classiquement une assise AS, ici solidarisée au plancher PL via des piètements, et un dossier DS, éventuellement monté à rotation par rapport à la partie arrière de l'assise AS.

On notera que, dans l'exemple non limitatif illustré sur les figures 1 et 2, chacun des sièges SI est destiné à accueillir une unique personne. Mais, l'invention n'est pas limitée aux sièges monoplaces. En effet, elle concerne également les banquettes destinées à accueillir au moins deux personnes.

Chaque siège SI est équipé d'un dispositif anti-remous D, selon l'invention, qui comprend au moins un cadre CD en forme de U et un filet anti-remous FA monté sur le cadre CD.

On notera que le filet anti-remous FA peut être éventuellement réalisé dans un matériau légèrement élastique.

Le cadre CD comprend deux parties latérales PLi (i = 1 ou 2) et une partie transversale PT (c'est-à-dire alignée sensiblement suivant la direction Y) qui joint les deux parties latérales PLi.

Chaque partie transversale PT comprend une extrémité E qui est propre à être montée à rotation sur la face arrière FR du dossier DS.

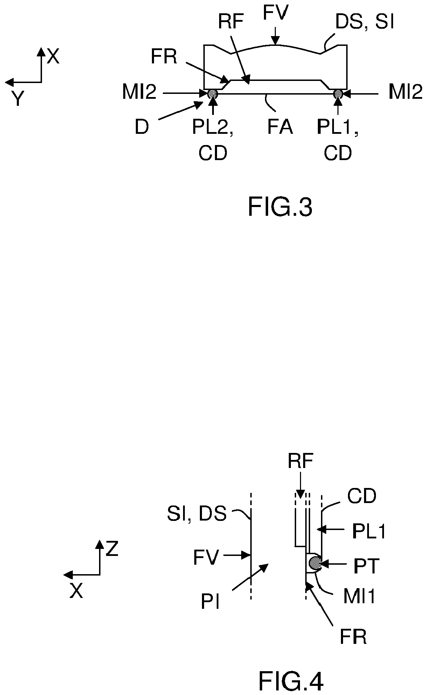

On entend ici par "face arrière" une face qui est opposée à la face avant FV (voir figures 3 et 4) sur laquelle peut s'appuyer le dos d'un passager.

Ce montage à rotation peut, par exemple, se faire au moyen de deux charnières CH solidarisées à la face arrière FR du dossier DS sensiblement à un même niveau suivant la direction verticale Z et auxquelles sont solidarisées les extrémités E des parties latérales PLi du cadre CD. Ces charnières CH peuvent être réalisées en métal ou en matière plastique. Elles peuvent être constituées de deux pièces assemblées, ou bien d'une unique pièce flexible.

Dans une variante de réalisation, les extrémités E des parties latérales PLi du cadre CD pourraient être conformées de manière à être logées à rotation dans des logements définis sur la face arrière FR du dossier DS. A cet effet, elles (E) peuvent par exemple comporter chacune une ou deux protubérances cylindriques circulaires logées à rotation dans une partie centrale d'un clip, évidée, ouverte et définissant un logement partiellement cylindrique circulaire. On notera que cette variante de réalisation permet de rendre amovible le cadre CD, étant donné que ce dernier (CD) peut être déclippé afin d'être rangé dans le cabriolet ou entreposé à l'extérieur du cabriolet.

Grâce à son montage à rotation sur la face arrière FR du dossier DS, le cadre CD peut prendre soit une position redressée, illustrée sur le siège droit SI de la figure 1, soit une position rabattue, illustrée sur le siège gauche SI de la figure 1.

Plus précisément, dans la position redressée, le filet FA s'étend au-dessus de la partie supérieure PS du dossier DS, au niveau de laquelle est solidarisée l'éventuel appui-tête AT. La partie transversale PT du cadre CD est alors placée dans une position supérieure, ici située au voisinage de l'appui-tête AT.

Dans la position rabattue, le filet FA est placé devant la face arrière FR du dossier DS et la partie transversale PT du cadre CD est placée dans une position inférieure, ici située au niveau de la partie inférieure PI du dossier DS (qui est solidarisée à la partie arrière de l'assise AS), de sorte que le filet FA et le cadre CD définissent avec la face arrière FR du dossier DS un espace destiné à permettre le rangement d'un ou plusieurs objets de petites dimensions.

On comprendra que la partie transversale PT et les parties latérales PLi du cadre CD délimitent respectivement le fond (rigide) et les côtés latéraux (rigides) de l'espace de rangement, alors que dans le même temps le filet FA et la face arrière FR délimitent respectivement les parties avant et arrière de ce même espace de rangement.

On notera, comme illustré non limitativement sur les figures 1 à 4, qu'il est particulièrement avantageux que le cadre CD soit placé dans sa position rabattue contre une partie de la face arrière FR du dossier DS qui définit un renfoncement RF. En effet, cela permet d'augmenter notablement le volume de l'espace de rangement.

Par ailleurs, afin que les objets logés dans l'espace de rangement ne puissent pas tomber par le fond délimité par la partie transversale PT, il est particulièrement avantageux, comme illustré non limitativement sur les figures 1, 2 et 4, que le dispositif anti-remous D comprenne des premiers moyens d'immobilisation MI1 propres à être solidarisés à la partie inférieure PI de la face arrière FR du dossier DS. Dans ce cas, les premiers moyens d'immobilisation MI1 sont agencés pour immobiliser, de façon réversible, le cadre CD dans sa position rabattue contre la face arrière FR.

Ces premiers moyens d'immobilisation MI1 peuvent se présenter sous n'importe quelle forme connue de l'homme de l'art. Ainsi, ils (MI1) peuvent, par exemple et comme illustré non limitativement sur la figure 4, être agencés sous la forme d'au moins un clip. On notera que dans l'exemple de la figure 4, les premiers moyens d'immobilisation MI1 comprennent deux clips destinés à loger deux portions différentes et décentrées de la partie transversale PT du cadre CD. Mais, ils pourraient ne comprendre qu'un unique clip en position centrale. Par ailleurs, ces clips pourraient être destinés à loger respectivement deux portions des parties latérales PLi du cadre CD, au lieu de deux portions différentes de la partie transversale PT de ce dernier (CD).

Dans une variante de réalisation non illustrée, les premiers moyens d'immobilisation MI1 peuvent être agencés sous la forme d'au moins un taquet destiné à être monté à rotation sur la face arrière FR du dossier DS (dans la partie inférieure PI). On entend ici par "taquet" une pièce ayant une forme générale en L et que l'on peut déplacer entre une première position, dans laquelle elle immobilise contre la face arrière FR une portion de la partie transversale PT ou d'une partie latérale PLi du cadre CD, et une seconde position, dans laquelle elle autorise l'entraînement en rotation du cadre CD.

Afin que le cadre CD puisse demeurer dans sa position redressée lorsque le cabriolet roule, même à vive allure, il est particulièrement avantageux, comme illustré non limitativement sur les figures 1 à 3, que le dispositif anti-remous D comprenne des seconds moyens d'immobilisation MI2 propres à être solidarisés à la partie supérieure PS de la face arrière FR du dossier DS.

Ces seconds moyens d'immobilisation MI2 peuvent se présenter sous n'importe quelle forme connue de l'homme de l'art. Ainsi, ils (MI2) peuvent, par exemple et comme illustré non limitativement sur la figure 3, être agencés sous la forme d'au moins deux clips. On notera que dans l'exemple de la figure 3, les seconds moyens d'immobilisation MI2 comprennent deux clips destinés à loger respectivement deux portions des parties latérales PLi du cadre CD afin de les immobiliser étroitement de façon réversible.

Dans une variante de réalisation non illustrée, les seconds moyens d'immobilisation MI2 peuvent être agencés sous la forme d'au moins deux taquets destinés à être montés à rotation sur la face arrière FR du dossier DS (dans la partie supérieure PS). On entend ici par "taquet" une pièce ayant une forme générale en L et que l'on peut déplacer entre une première position, dans laquelle elle immobilise contre la face arrière FR une portion de la partie latérale PLi du cadre CD, et une seconde position, dans laquelle elle autorise l'entraînement en rotation du cadre CD.

On notera, comme illustré non limitativement sur la figure 2, que le dispositif anti-remous D peut également comprendre au moins un cadre auxiliaire CA monté à rotation sur une partie latérale PLi du cadre CD et sur lequel est monté un filet anti-remous auxiliaire FA'. Ce filet anti-remous auxiliaire FA' est de préférence monté sur une partie latérale PLi qui est située en regard du siège SI voisin. Cela permet en effet d'étendre la zone anti-remous en direction du siège voisin, et, lorsque les deux sièges SI droit et gauche sont équipés d'un dispositif anti-remous D à cadre(s) auxiliaire(s) CA, d'obstruer quasi intégralement l'espace qui est situé entre les deux sièges SI droit et gauche et ainsi d'améliorer le confort des passagers.

On notera également que chaque partie latérale PLi d'un cadre CD peut être éventuellement équipée d'un cadre auxiliaire CA à filet anti-remous auxiliaire FA'.

Chaque cadre auxiliaire CA peut être monté à rotation sur une partie latérale PLi par tout moyen connu de l'homme de l'art. Ainsi, on peut, par exemple, utiliser au moins un clip et de préférence deux. Dans une variante de réalisation, on pourrait utiliser une ou deux charnières.

On comprendra que lorsque le dispositif anti-remous D comprend au moins un cadre auxiliaire CA, ce dernier (CA) est préférentiellement rabattu contre son cadre CD (par entraînement en rotation) une fois que ce dernier (CD) a été placé dans sa position rabattue.

L'invention offre plusieurs avantages, parmi lesquels:
- elle confère une double fonctionnalité,
- elle est peu onéreuse,
- elle est très facile à utiliser et ne risque pas de se coincer,
- elle peut constituer un élément participant au style du véhicule.

L'invention ne se limite pas aux modes de réalisation de dispositif anti-remous, de dossier de siège, de siège et de véhicule automobile de type cabriolet décrits ci-avant, seulement à titre d'exemple, mais elle englobe toutes les variantes que pourra envisager l'homme de l'art dans le cadre des revendications ci-après.

## Revendications

1. Dispositif anti-remous (D) pour un dossier (DS) de siège (SI) de véhicule automobile de type cabriolet, **caractérisé en ce qu'**il comprend un cadre (CD) en forme de U sur lequel est monté un filet anti-remous élastique (FA) et comprenant deux parties latérales (PLi) munies d'extrémités (E) propres à être montées à rotation sur une face arrière (FR) dudit dossier (DS) de manière à pouvoir prendre une position redressée dans laquelle ledit filet (FA) s'étend au-dessus d'une partie supérieure (PS) dudit dossier (DS), et une position rabattue dans laquelle ledit filet (FA) est placé devant ladite face arrière (FR) et ledit cadre (CD) comprend une partie transversale (PT) joignant ses deux parties latérales (PLi) et placée dans une position inférieure de sorte que ledit filet (FA) et ledit cadre (CD) définissent avec ladite face arrière (FR) un espace de rangement d'objet(s).

2. Dispositif selon la revendication 1, **caractérisé en ce que** ledit filet anti-remous est légèrement élastique (FA).

3. Dispositif selon l'une des revendications 1 et 2, **caractérisé en ce que** ledit cadre (CD) est propre à être placé dans sa position rabattue contre une partie de ladite face arrière (FR) du dossier (DS) qui définit un renfoncement (RF).

4. Dispositif selon l'une des revendications 1 à 3, **caractérisé en ce qu'**il comprend deux charnières (CH) auxquelles sont solidarisées lesdites extrémités (E) des parties latérales (PLi) du cadre (CD) et propres à être solidarisées à ladite face arrière (FR) du dossier (DS).

5. Dispositif selon l'une des revendications 1 à 3, **caractérisé en ce que** lesdites extrémités (E) des parties latérales (PLi) du cadre (CD) sont conformées de manière à être logées à rotation dans des logements définis sur ladite face arrière (FR) du dossier (DS).

6. Dispositif selon l'une des revendications 1 à 5, **caractérisé en ce qu'**il comprend des premiers moyens d'immobilisation (MI1) propres à être solidarisés à une partie inférieure (PI) de ladite face arrière (FR) du dossier (DS) et agencés pour immobiliser ledit cadre (CD) dans sa position rabattue contre ladite face arrière (FR).

7. Dispositif selon la revendication 6, **caractérisé en ce que** lesdits premiers moyens d'immobilisation (MI1) comprennent au moins un clip.

8. Dispositif selon la revendication 6, **caractérisé en ce que** lesdits premiers moyens d'immobilisation (MI1) comprennent au moins un taquet monté à rotation sur ladite face arrière (FR) du dossier (DS).

9. Dispositif selon l'une des revendications 1 à 8, **caractérisé en ce qu'**il comprend des seconds moyens d'immobilisation (MI2) propres à être solidarisés à une partie supérieure (PS) de ladite face arrière (FR) du dossier (DS) et agencés pour immobiliser ledit cadre (CD) dans sa position redressée.

10. Dispositif selon la revendication 9, **caractérisé en ce que** lesdits seconds moyens d'immobilisation (MI2) comprennent au moins deux clips propres à immobiliser étroitement et respectivement les deux parties latérales (PLi) dudit cadre (CD).

11. Dispositif selon la revendication 9, **caractérisé en ce que** lesdits seconds moyens d'immobilisation (MI2) comprennent au moins deux taquets montés à rotation sur ladite face arrière (FR) du dossier (DS) et propres à immobiliser étroitement et respectivement les deux parties latérales (PLi) dudit cadre (CD).

12. Dispositif selon l'une des revendications 1 à 11, **caractérisé en ce qu'**il comprend en outre au moins un cadre auxiliaire (CA) monté à rotation sur une partie latérale (PLi) dudit cadre (CD) et sur lequel est monté un filet anti-remous auxiliaire (FA').

13. Dossier (DS) pour un siège (SI) de véhicule automobile de type cabriolet, **caractérisé en ce qu'**il comprend une face arrière (FR) équipée d'un dispositif anti-remous (D) selon l'une des revendications précédentes.

14. Siège (SI) pour un véhicule automobile de type cabriolet, **caractérisé en ce qu'**il comprend un dossier rabattable (DS) selon la revendication 13.

15. Véhicule automobile de type cabriolet et comprenant un plancher (PL), **caractérisé en ce qu'**il comprend en outre au moins un siège (SI) selon la revendication 14, installé sur ledit plancher (PL).
